# EUROPEAN PATENT APPLICATION

(11) **EP 4 686 299 A1**
(43) Date of publication of application: **28.01.2026**
(21) Application number: 24784257.8
(22) Date of filing: 02.04.2024
(51) Int. Cl.: H04W 72/40

(54) **ELECTRONIC APPARATUS FOR RECEIVING END AND SENDING END FOR SIDELINK COMMUNICATION, AND METHOD**

(30) Priority: 06.04.2023 CN 202310358854
(71) Applicant: Sony Group Corporation, Tokyo 108-0075 (JP)
(72) Inventor: SUN, Chen, Beijing 100027 (CN); WANG, Xiaoxue, Beijing 100027 (CN)
(74) Representative: D Young & Co LLP
(86) International application number: PCT/CN2024/085450
(87) International publication number: WO 2024/208173

(57) **Abstract**

The present invention provides an electronic apparatus for a receiving end device and a sending end device for sidelink communication, a method, and a computer-readable storage medium. The electronic apparatus for the receiving end device comprises: a processing circuit configured to: in beam-based communication executed by a sending end device for sidelink communication, periodically switch to an omnidirectional communication mode; and in a time period of using the omnidirectional communication mode, send feedback information and/or control information to the sending end device.

## Description

This application claims priority to Chinese Patent Application No. 202310358854.6 titled "ELECTRONIC APPARATUS FOR RECEIVING END AND SENDING END FOR SIDELINK COMMUNICATION, AND METHOD", filed on April 06, 2023 with the China National Intellectual Property Administration, which is incorporated herein by reference in its entirety.

### FIELD

The present disclosure relates to the technical field of wireless communications, and in particular to feedback channel design in sidelink (SL) communications. In particular, the present disclosure relates to an electronic apparatus and method for a receiving end device and a transmitting end device for SL communication, and a computer-readable storage medium.

### BACKGROUND

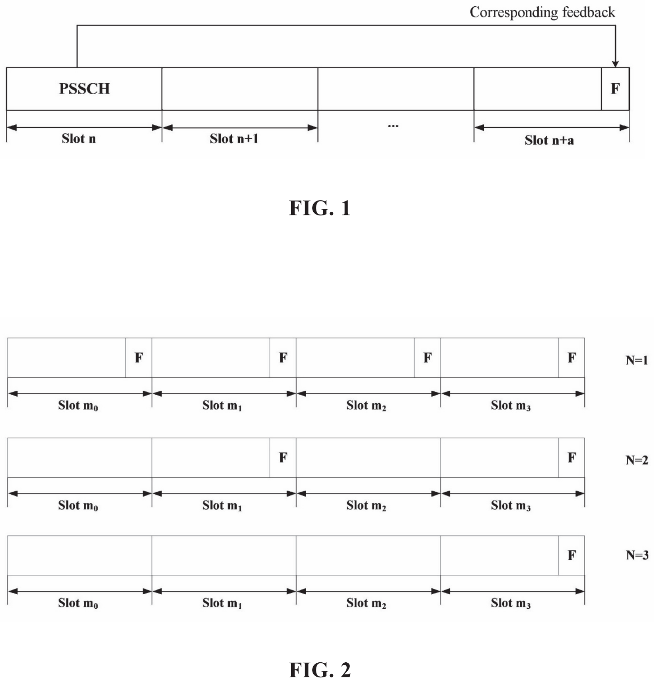

For SL communication, the current 3GPP standard stipulates that if a receiving User Equipment (UE) receives transmission of a Physical Sidelink Shared Channel (PSSCH) in slot n of a resource pool, and a value of the Sidelink Control Information (SCI) 2-A or 2-B corresponding to the PSSCH is 1, the receiving UE may provide ACK/NACK information on a corresponding Physical Sidelink Shared Channel (PSSCH) resource. A corresponding PSFCH resource may appear at slot n+a, where a is a smallest value greater than or equal to K, where K=sl-MinTimeGapPSFCH-r16, and there is a PSFCH resource in n+a. FIG. 1 shows a schematic diagram of a method for determining a time domain of a PSFCH resource corresponding to a PSSCH, where F represents a PSFCH resource.

In a SL feedback channel design of Rel-16/17, the 13th Orthogonal Frequency Division Multiplexing (OFDM) symbol of which slots the PSFCH appears on is specified by configuring periodic parameter N=1, 2, and 4 slots, for a resource pool. FIG. 2 shows a schematic diagram of a time domain position of a PSFCH resource in a resource pool in which a feedback period is configured.

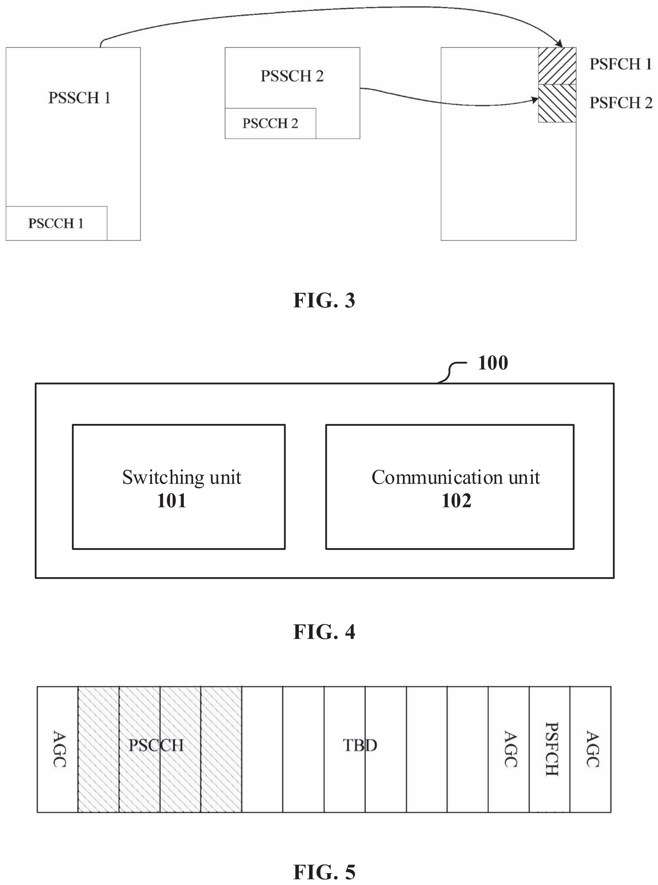

In addition, a feedback channel on a same OFDM symbol for a receiving UE may provide feedback on transmission data of multiple transmitting UEs. FIG. 3 shows a schematic diagram of a method for determining a frequency domain of a PSFCH corresponding to a PSSCH of a transmitting UE. As shown in FIG. 3, PSSCH data from two transmitting UEs is provided feedback in a feedback channel on same OFDM symbol of a receiving UE. The method for determining a frequency domain of a PSFCH is related to a slot where the corresponding PSSCH is located, a sub-channel (sub_channel), a source identifier (source_ID), and a destination identifier (destination_ID). It may be considered that one PSSCH corresponds to one PSFCH resource without collision.

In a case where the receiving UE is configured with a feedback channel in a current slot, a result of the feedback channel is broadcast and transmitted, and the transmitting UE receives a confirmation result fed back to itself in a fixed slot and frequency domain.

In SL researches of Rel-18, millimeter wave technology may be applied to SL and become an effective measure for improving a rate of SL services and reducing transmission delay. In SL millimeter wave communications, data transmission is directional, that is, beam-based SL communication is performed.

### SUMMARY

Hereinafter provided is a brief summary of the present disclosure, which is intended to provide a basic understanding of aspects of the present disclosure. It should be understood that this summary is not an exhaustive overview of the present disclosure. The summary is not intended to identify key or critical portions of the present disclosure or to delineate the scope of the present disclosure. The purpose is merely to present some concepts in a simplified form, as a prelude to the more detailed description that is presented later.

According to an aspect of the present disclosure, an electronic apparatus for a receiving end device for SL communication is provided. The electronic apparatus includes a processing circuitry configured to: periodically switch to an omnidirectional communication mode in beam-based communications with transmitting end devices for the sidelink communication; and transmit feedback information and/or control information to the transmitting end devices within a period of time during which the omnidirectional communication mode is adopted.

According to another aspect of the present disclosure, a method for a receiving end device for SL communication is provided. The method includes: periodically switching to an omnidirectional communication mode in beam-based communication with transmitting end devices for SL communication; and transmitting feedback information and/or control information to the transmitting end devices within a period of time during which the omnidirectional communication mode is adopted.

According to another aspect of the present disclosure, an electronic apparatus for a transmitting end device for SL communication is provided. The electronic apparatus includes a processing circuitry configured to: periodically switch to an omnidirectional communication mode in beam-based communication with a receiving end device for SL communication; and receive feedback information and/or control information from the receiving end device within a period of time during which the omnidirectional communication mode is adopted.

According to another aspect of the present disclosure, a method for a transmitting end device for SL communication is provided. The method includes: periodically switching to an omnidirectional communication mode in beam-based communication with a receiving end device for SL communication; and receiving feedback information and/or control information from the receiving end device within a period of time during which the omnidirectional communication mode is adopted.

According to other aspects of the present disclosure, a computer program codes and a computer program product for implementing the above-described method and a computer-readable storage medium having the computer program codes for implementing the above-described method stored thereon are further provided.

With the electronic apparatuses and the methods according to the embodiments of the present disclosure, switching to the omnidirectional communication is performed periodically to transmit feedback information and/or control information, which enables a timely and reliable delivery of the information.

These and other advantages of the present disclosure become more apparent through a detailed description below of preferred embodiments of the present disclosure in conjunction with accompany drawings.

### BRIEF DESCRIPTION OF THE DRAWINGS

For a further illustration of the above and other advantages and features of the present disclosure, embodiments of the present disclosure are further described in detail hereinafter in conjunction with accompanying drawings. The drawings, together with the detailed description below, are incorporated into and form a part of the specification. Elements having the same function and structure are denoted by same reference signs. It should be noted that the drawings illustrate merely typical embodiments of the present disclosure and should not be construed as a limitation to the scope of the present disclosure. In the drawings:
FIG. 1 shows a schematic diagram of a method for determining a time domain of a PSFCH resource corresponding to a PSSCH;
FIG. 2 shows a schematic diagram of a time domain position of a PSFCH resource in a resource pool in which a feedback period is configured;
FIG. 3 shows a schematic diagram of a method for determining a frequency domain of a PSFCH corresponding to a PSSCH of a transmitting UE;
FIG. 4 is a block diagram of functional modules of an electronic apparatus for a receiving end device for SL communication according to an embodiment of the present disclosure;
FIG. 5 shows a first example of design of an omnidirectional communication slot;
FIG. 6 shows an example of information transmission of a first stage SCI;
FIG. 7 shows a second example of design of an omnidirectional communication slot;
FIG. 8 shows a third example of design of an omnidirectional communication slot;
FIG. 9 shows a third example of design of an omnidirectional communication slot;
FIG. 10 is a block diagram of functional modules of an electronic apparatus for a transmitting end device for SL communication according to another embodiment of the present disclosure;
FIG. 11 shows a flow chart of a method for a receiving end device for SL communication according to another embodiment of the present disclosure;
FIG. 12 shows a flow chart of a method for a transmitting end device for SL communication according to another embodiment of the present disclosure;
FIG. 13 is a block diagram showing an example of a schematic configuration of a smart phone to which the technology of the present disclosure is applicable;
FIG. 14 is a block diagram showing an example of a schematic configuration of an automobile navigation device to which the technology of the present disclosure is applicable; and
FIG. 15 is a block diagram of an exemplary structure of a general-purpose personal computer in which methods and/or apparatuses and/or systems according to an embodiment of the present disclosure may be implemented.

### DETAILED DESCRIPTION

Exemplary embodiments of the present disclosure are described below in conjunction with the drawings. For the sake of clarity and conciseness, not all features of an actual embodiment are described in the specification. However, it is to be appreciated that numerous implementation-specific decisions shall be made while developing any of such actual embodiments so as to achieve specific objectives of a developer, for example, to comply with those system and business-related constraining conditions which vary from one implementation to another. Furthermore, it should be understood that the development work, although may be complicated and time-consuming, is only a routine task for those skilled in the art benefiting from the present disclosure.

Here, it should be further noted that in order to avoid obscuring the present disclosure due to unnecessary details, only apparatus structures and/or processing steps closely related to the solutions according to the present disclosure are illustrated in the drawings, and other details less related to the present disclosure are omitted.

### <First Embodiment>

As mentioned above, in beam-based SL communication, a beam is directional, which is different from the omnidirectional transmission in a low frequency band FR1 in existing SL communication. Therefore, an existing transmission method of feedback information and control information cannot be applied. In view of this, a transmission solution for feedback information and/or control information in beam-based SL communication is provided in the embodiment. It should be understood that the beam-based SL communication described here may be SL communication using millimeter wave technology, but is not limited thereto, and covers all beam-based SL communications that perform directional transmission.

For example, in beam-based SL communication, if a receiving UE directionally transmits a feedback channel, such as a PSFCH, and the feedback channel carries feedback on reception results of data packets from multiple transmitting UEs, then only a transmitting UE in this direction is able to receive a feedback result, and transmitting UEs in other directions cannot receive feedback results. On the other hand, if a receiving UE transmits a same feedback channel (including a result that the receiving UE should feed back on a corresponding OFDM) in different beam directions for multiple transmitting UEs, then a waste of resources is caused. In addition, in a case where a feedback channel of a beam only feeds back a data result received on this beam, due to rapid change in a relative position between the transmitting UE and the receiving UE, then a direction of the beam may have changed until feedback is performed on transmitted data of the transmitting UE after received on the beam. Moreover, not every slot is configured with a feedback channel. Therefore, when a receiving UE performs SL communication using a beam paired with the transmitting UE, a slot where the feedback channel is located may not match a slot of the beam communication, so that the transmitting UE cannot correctly and timely receive feedback information, resulting in reduced reliability and increased latency.

The electronic apparatus 100 according to the embodiment of the present disclosure periodically switches to the omnidirectional communication to transmit feedback information and/or control information, which enables a timely and reliable delivery of the information.

FIG. 4 is a block diagram of functional modules of an electronic apparatus 100 for a receiving end device for SL communication according to an embodiment of the present disclosure. As shown in FIG. 4, the electronic apparatus 100 includes a switching unit 101 and a communication unit 102. The switching unit 101 is configured to periodically switch to an omnidirectional communication mode in beam-based communication with a transmitting end device for the sidelink communications. The communication unit 102 is configured to transmit feedback information and/or control information to the transmitting end device within a period of time during which the omnidirectional communication mode is adopted.

The switching unit 101 and the communication unit 102 may be implemented by one or more processing circuits. The processing circuits may be implemented as a chip or a processor, for example. It should be understood that various functional units in the electronic apparatus shown in FIG. 4 are only logical modules divided based on the specific implemented functions thereof, and are not intended to limit a specific implementation.

The electronic apparatus 100, for example, is provided on a wireless communication terminal side or is communicably connected to a wireless communication terminal. The wireless communication terminal here may be various User Equipment (UE) or user terminals, or may be a communication terminal such as a mobile base station. For example, the electronic apparatus 100 is arranged on the receiving end device side.

The electronic apparatus 100 may be implemented at a chip level or at a device level. For example, the electronic apparatus 100 may operate as the wireless communication terminal itself and may further include external devices such as a memory, a transceiver (not shown), and the like. The memory may store programs that need to be executed by the wireless communication terminal to implement various functions and related data information. The transceiver may include one or more communication interfaces to support communication with different devices (such as another wireless communication terminal, a base station, a core network, and the like). An implementation of the transceiver is not specifically limited here.

For example, when switching to the omnidirectional communication mode, the SL communication between the receiving end device and the transmitting end device is performed on a low frequency band, instead of beam-based SL communication on a high frequency band. The communication unit 102 transmits feedback information and/or control information through omnidirectional broadcast. In a SL communication scenario, many reference signals and data such as feedback information and first stage control information are expected to be received by as many users as possible. Such requirement may be satisfied by periodically transmitting feedback information and/or control information through omnidirectional communication. Hereinafter, the transmitting end device is referred to as a transmitting UE, and the receiving end device is referred to as a receiving UE.

For example, the switching unit 101 may be configured to perform the switching in one or more slots as a period. For example, the period of the switching may be configured based on a periodic design of a periodic feedback channel of Rel-16, or a periodic configuration specific to Rel-18 may be used. For example, the period may be N slots, where a value of N may be {1, 2, 4}, or may be arbitrarily selected from {1, 2, 3, ..., 32}. The period may be configured by a base station, or may be recorded in a factory configuration.

The period of time during which the omnidirectional communication mode is adopted includes one or more slots, which are represented as M slots, for example. That is, the SL communication between the transmitting UE and the receiving UE is switched to the omnidirectional communication mode every N slots, and the omnidirectional communication mode lasts for M slots. The following description is made with an example of M=1, which is not restrictive.

In addition, the communication unit 102 may be further configured to receive a dynamic feedback indicator from the transmitting end device, and the switching unit 101 may be configured to dynamically set the period of time during which the omnidirectional communication is adopted according to the dynamic feedback indicator. Such dynamic setting may serve as a supplement to the periodic switching, thereby improving flexibility of transmission of the feedback information and/or control information.

For example, the switching unit 101 is configured to switch to the omnidirectional communication mode in a period of time indicated by the dynamic feedback indicator. That is, in addition to the period of time of the omnidirectional communication which occurs periodically, an additional period of time of the omnidirectional communication may be dynamically set to transmit the feedback information and/or control information, so as to further reduce delay.

Alternatively, the switching unit 101 is configured to skip switching to the omnidirectional communication mode in the period of time indicated by the dynamic feedback indicator. That is, in a period of time when switching to the omnidirectional communication is to be performed based on the periodic configuration, according to the dynamic feedback indicator, such a switching is not performed. This occurs, for example, when there is no need to transmit feedback information and/or control information, so that overhead caused by switching is reduced and power consumption is reduced.

A method of transmitting feedback information and control information is described in detail below through examples. It should be noted that in the following description, a period of time during which the omnidirectional communication mode is adopted is one slot, as an example, which is not restrictive. For example, in a case where the period of time during which the omnidirectional communication mode is adopted includes multiple slots, the following description is applicable to each slot of the multiple slots. Hereinafter, the slot during which the omnidirectional communication mode is adopted is referred to as an omnidirectional communication slot. Since information transmitted by the receiving end device in the omnidirectional communication slot is transmitted in an omnidirectional communication mode, the information can be received by transmitting end devices located in different directions.

For example, the communication unit 102 may be configured to transmit the feedback information with one or more OFDM symbols in an omnidirectional communication slot.

In a case of transmitting the feedback information with one OFDM symbol in an omnidirectional communication slot, the one OFDM symbol corresponds to PSFCHs for the transmitting end devices, one specific bit in the one OFDM symbol corresponds to a PSFCH for one transmitting end device, for indicating a transmission result of one PSSCH of the one transmitting end device. For example, the one OFDM symbol may be the 13th OFDM symbol in the omnidirectional communication slot. In other words, multiple specific bits of one OFDM symbol may be respectively used to provide feedback on transmission results of multiple PSSCHs of multiple transmitting end devices. In a frequency domain, a frequency domain resource corresponding to the one OFDM symbol is preconfigured and divided into multiple PSFCH resources, and the PSFCH for the one transmitting end device corresponds to one PSFCH resource in the frequency domain. For example, a base station may transmit a radio resource control (RRC) signaling to the UE to preconfigure a frequency band/frequency domain resource for the omnidirectional communication slot. In other words, the frequency domain resource corresponding to the one OFDM symbol is preconfigured through the RRC signaling. Alternatively, a certain frequency band may be preset as a frequency band/frequency domain resource for the omnidirectional communication slot. In other words, the frequency domain resource corresponding to the one OFDM symbol is preset.

In a case of transmitting the feedback information with multiple OFDM symbols in an omnidirectional communication slot, each one or more OFDM symbols among the multiple OFDM symbols correspond to PSFCHs of one transmitting end device, for indicating transmission results of one or more PSSCHs of the one transmitting end device. In this case, the feedback information for one transmitting end device transmitted through the PSFCHs is not limited to one bit, but may occupy one or more OFDM symbols. In this way, multiple bits may be used to feed back transmission results of multiple PSSCHs from a same transmitting end device. In addition, one or more OFDM symbols corresponding to one transmitting end device may further include assistance information of for the PSFCH for the transmitting end device. For example, the assistance information includes information indicating resources that can be used by the transmitting end device or information indicating resources that cannot be used by the transmitting end device. The frequency domain resources corresponding to the one or more OFDM symbols for one transmitting end device are preconfigured, and the number and start and end positions of physical resource blocks (PRBs) occupied by the frequency domain resources are fixed. For example, the frequency domain resources are the same as frequency domain resources for corresponding PSSCHs, and are determined by the transmitting end device.

In addition, in the omnidirectional communication slot, control information such as a first stage SCI may be transmitted through time division multiplexing (TDM). The first stage SCI is, for example, for indicating occupancy of transmission resources, which helps the transmitting end device in resource selection. The communication unit 102 is configured to transmit the first stage SCI with one or more OFDM symbols in an omnidirectional communication slot. The first stage SCI includes, for example, information about time-frequency resources to be utilized and preserved by the receiving end device. The transmitting end device that receives the first stage SCI excludes time-frequency resources that are to be utilized and preserved by the receiving end device which are indicated by the first stage SCI, when selecting time-frequency resources for data transmission with other user equipment. In this way, resource collision is effectively avoided.

Here, one or more Physical Sidelink Control Channels (PSCCHs) may be designed to carry the first stage SCI. In other words, one or more OFDM symbols for transmitting the first stage SCI may correspond to one or more PSCCHs. In a case where one or more OFDM symbols for transmitting the first stage SCI correspond to one PSCCH, the PSCCH is used for all transmitting end devices, and the first stage SCI carried by the PSCCH is for indicating time-frequency resources to be utilized and preserved by the receiving end device.

In the case where one or more OFDM symbols for transmitting the first stage SCI correspond to multiple PSCCHs, each PSCCH occupies a portion of the one or more OFDM symbols and corresponds to one transmitting end device. The first stage SCI carried by each PSCCH includes information about time-frequency resources to be utilized and preserved by the receiving end device for the transmitting end device. In addition, the first stage SCI carried by each PSCCH may further include beam information for the transmitting end device. The beam information includes, for example, a duration of a beam, and the like. The beam here may be a beam after beam pairing. In this case, the transmitting end device that receives the first stage SCI transmitted with one or more OFDM symbols is able to distinguish which time-frequency resources are allocated to which UE and which beam for utilization. Hence, a scope of resource exclusion is narrowed, so that selection of time-frequency resources is more accurate and a utilization efficiency of the time-frequency resources is improved.

Examples of design of an omnidirectional communication slot are described below with reference to FIG. 5 to FIG. 9. It should be noted that these examples are not restrictive. In description of various examples, the same or similar parts are omitted for the sake of brevity.

FIG. 5 shows a first example of design of an omnidirectional communication slot. In the first example, the PSFCH occupies one OFDM symbol (the 13th OFDM symbol of a slot), and one PSCCH is designed for carrying the first stage SCI. The PSCCH occupies four OFDM symbols, which is only an example, and the PSCCH may occupy fewer or more OFDM symbols. In addition, a TBD represents an OFDM symbol whose usage is yet to be determined. The OFDM symbols corresponding to AGCs at both ends of the slot may be used for beam switching. In addition, guard intervals may be set before and after the slot to ensure successful execution of the beam switching.

As mentioned above, a specific bit in the OFDM symbol occupied by a PSFCH may be used for providing feedback on a transmission result of a PSSCH from one transmitting end device. PSFCHs for different transmitting end devices are all carried in the OFDM symbol.

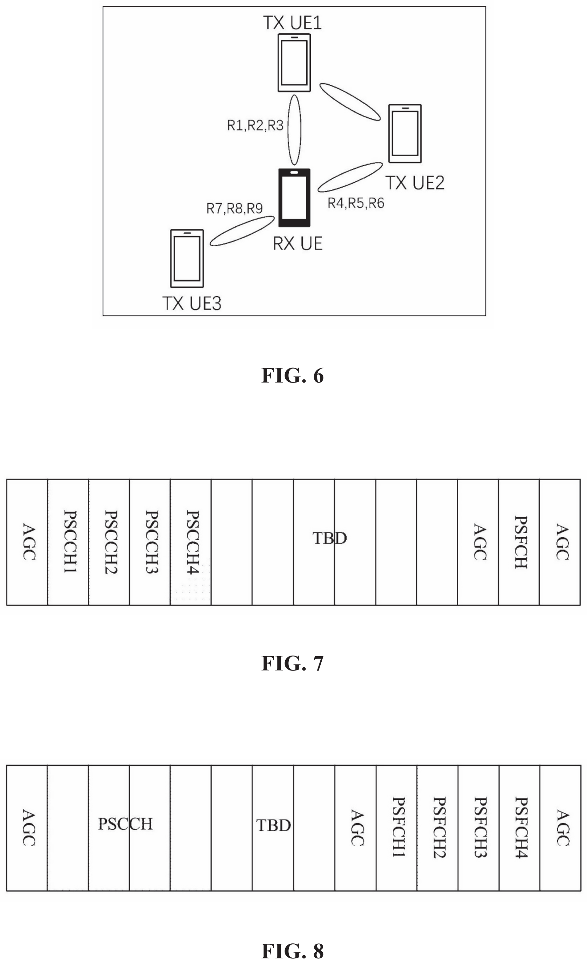

FIG. 6 shows an example of information transmission of a first stage SCI. In the figure, TX UE1 to TX UE3 represent transmitting end device 1 to transmitting end device 3, RX UE represents a receiving end device, and R1 to R9 represent time-frequency resources, respectively. The RX UE transmits a first stage SCI to the TX UE1 to TX UE3 through omnidirectional broadcast in an omnidirectional communication slot. Since only one PSCCH is designed, the first stage SCI indicates that the RX UE is to utilize or preserve time-frequency resources R1 to R9 for data transmission. For example, the TX UE1 that receives the first-stage SCI excludes the R1 to R9 when selecting time-frequency resources for data transmission with the TX UE2.

FIG. 7 shows a second example of design of an omnidirectional communications slot. In the second example, a PSFCH still occupies one OFDM symbol (the 13th OFDM symbol in a slot). However, unlike the first example, four PSCCHs are designed for carrying first-stage SCIs for four transmitting end devices, respectively, and each PSCCH occupies one OFDM symbol. It should be noted that less than four PSCCHs may be transmitted in a case where the number of transmitting end devices which establish a connection with the receiving end device is less than four. In this example, the PSCCH for each transmitting end device may include information about time-frequency resources to be utilized and preserved by the receiving end device for the transmitting end device, and beam information for the transmitting end device.

In the example as in FIG. 6, it is assumed that: PSCCH1 is for carrying a first stage SCI for TX UE1 which indicates that RX UE is to utilize R1 to R3 for TX UE1; PSCCH2 is for carrying a first stage SCI for TX UE2 which indicates that RX UE is to utilize R4 to R6 for TX UE2; and PSCCH3 is for carrying a first stage SCI for TX UE3 which indicates that RX UE is to utilize R7 to R9 for TX UE3. TX UE1 finds that no communication beam is established with TX UE3, then resources R7 to R9 used on a communication beams between RX UE and TX UE3 can be used for communication between TX UE1 and TX UE2. Therefore, when selecting resources for communication with TX UE2, TX UE1 does not exclude R7 to R9, but only excludes R1 to R6. In this way, a utilization efficiency of the resources is improved.

FIG. 8 shows a third example of design of an omnidirectional communications slot. In the third example, like the first example, one PSCCH is designed for carrying the first stage SCI. The PSCCH occupies four OFDM symbols. However, unlike the first example, the PSFCH occupies multiple OFDM symbols. Each OFDM symbol corresponds to a PSFCH for one transmitting end device.

In the example as in FIG. 6, for example, PSFCH1 corresponds to TX UE1, PSFCH2 corresponds to TX UE2, and PSFCH3 corresponds to TX UE3. For example, the OFDM symbol corresponding to PSFCH1 may indicate transmission results of multiple PSSCHs from TX UE1, and the OFDM symbol corresponding to PSFCH1 may further include assistance information of PSFCH1, and the like.

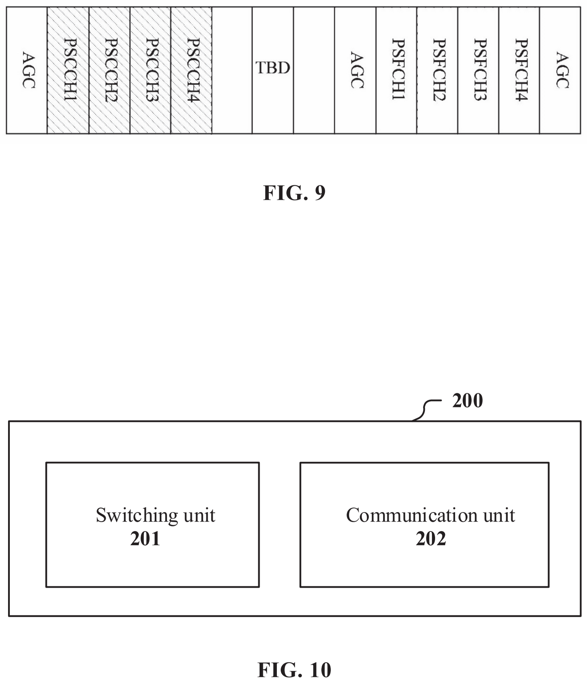

FIG. 9 shows a fourth example of design of an omnidirectional communications slot. In the fourth example, like the third example, a PSFCH occupies multiple OFDM symbols. However, unlike the third example, four PSCCHs are designed for carrying first stage SCIs for four transmitting end devices, respectively, and each PSCCH occupies one OFDM symbol. Design of the PSCCHs is described in detail in the second example, and is not repeated here.

In summary, the electronic apparatus 100 according to the embodiment periodically switches beam-based SL communication to the omnidirectional communication to transmit feedback information and/or control information, which enables a timely and reliable delivery of the information.

### <Second Embodiment>

FIG. 10 is a block diagram of functional modules of an electronic apparatus 200 for a transmitting end device for SL communication according to another embodiment of the present disclosure. As shown in FIG. 10, the electronic apparatus 200 includes a switching unit 201 and a communication unit 202. The switching unit 101 is configured to periodically switch to an omnidirectional communication mode in beam-based communication with a receiving end device for the SL communication. The communication unit 102 is configured to receive feedback information and/or control information from the receiving end device within a period of time during which the omnidirectional communication mode is adopted.

The switching unit 201 and the communication unit 202 may be implemented by one or more processing circuits. The processing circuits may be implemented as a chip or a processor, for example. It should be understood that various functional units in the electronic apparatus shown in FIG. 10 are only logical modules divided based on the specific implemented functions thereof, and are not intended to limit a specific implementation.

The electronic apparatus 200, for example, is provided on a wireless communication terminal side or is communicably connected to a wireless communication terminal. The wireless communication terminal here may be various UE or user terminals, or may be a communication terminal such as a mobile base station. For example, the electronic apparatus 200 is arranged on the transmitting end device side.

The electronic apparatus 200 may be implemented at a chip level or at a device level. For example, the electronic apparatus 200 may operate as the wireless communication terminal itself and may further include external devices such as a memory, a transceiver (not shown), and the like. The memory may store programs that need to be executed by the wireless communication terminal to implement various functions and related data information. The transceiver may include one or more communication interfaces to support communication with different devices (such as another wireless communication terminal, a base station, a core network, and the like). An implementation of the transceiver is not specifically limited here.

Similar to the first embodiment, when switching to the omnidirectional communication mode, the SL communication between the receiving end device and the transmitting end device is performed on a low frequency band, instead of beam-based SL communication on a high frequency band. The communication unit 202 receives feedback information and/or control information through omnidirectional broadcast. In a SL communication scenario, many reference signals and data such as feedback information and first stage control information are expected to be received by as many users as possible. Such requirement may be satisfied by periodically transmitting feedback information and/or control information through omnidirectional communication.

For example, the switching unit 201 may be configured to perform the switching in one or more slots as a period. As mentioned above, a period of the switching may be configured based on a periodic design of a periodic feedback channel of Rel-16, or a periodic configuration specific to Rel-18 may be used. For example, the period may be N slots, where a value of N may be {1, 2, 4}, or may be arbitrarily selected from {1, 2, 3, ..., 32}. The period may be configured by a base station, or may be recorded in a factory configuration.

The period of time during which the omnidirectional communication mode is adopted includes one or more slots, which are represented as M slots, for example. That is, the SL communication between the transmitting UE and the receiving UE is switched to the omnidirectional communication mode every N slots, and the omnidirectional communication mode lasts for M slots. The description here is made with an example of M=1, which is not restrictive.

In addition, the communication unit 202 may be further configured to transmit a dynamic feedback indicator to the receiving end device, so as to dynamically set the period of time during which the omnidirectional communication mode is adopted. Such dynamic setting may serve as a supplement to the periodic switching, thereby improving flexibility of reception of the feedback information and/or control information.

For example, the switching unit 201 is configured to switch to the omnidirectional communication mode in a period of time indicated by the dynamic feedback indicator. That is, in addition to the period of time of the omnidirectional communication which occurs periodically, an additional period of time of omnidirectional communication may be dynamically set to receive the feedback information and/or control information, so as to further reduce delay. Alternatively, the switching unit 201 is configured to skip switching to the omnidirectional communication mode in the period of time indicated by the dynamic feedback indicator. That is, in a period of time when switching to the omnidirectional communication is to be performed based on the periodic configuration, according to the dynamic feedback indicator, such a switching is not performed. This occurs, for example, when there is no need to transmit feedback information and/or control information, so that overhead caused by switching is reduced and power consumption is reduced.

A method of receiving feedback information and control information is described in detail below through examples. It should be noted that the following description is made with an example of adopting one omnidirectional communication slot, which is not restrictive. For example, in a case where multiple omnidirectional communication slots are adopted, the following description is applicable to each of the omnidirectional communication slots. Since information transmitted by the receiving end device in the omnidirectional communication slot is transmitted in an omnidirectional communication mode, the information can be received by transmitting end devices located in different directions.

For example, the communication unit 202 may be configured to receive the feedback information on one or more OFDM symbols in an omnidirectional communication slot.

In an example, the communication unit 202 is configured to receive the feedback information on one OFDM symbol in an omnidirectional communication slot, where one specific bit in the one OFDM symbol corresponds to a PSFCH for the transmitting end device, for indicating a transmission result of one PSSCH of the transmitting end device. For example, the one OFDM symbol may be the 13th OFDM symbol in the omnidirectional communication slot. In other words, multiple specific bits of one OFDM symbol may be respectively used to provide feedback on transmission results of multiple PSSCHs of multiple transmitting end devices. In a frequency domain, a frequency domain resource corresponding to the one OFDM symbol is preconfigured and divided into multiple PSFCH resources, and the PSFCH for the transmitting end device corresponds to one specific PSFCH resource in the frequency domain.

In another example, the communication unit 202 is configured to receive the feedback information on one or more specific OFDM symbols in an omnidirectional communication slot, where the one or more specific OFDM symbols correspond to PSFCHs of the transmitting end device, for indicating transmission results of one or more PSSCHs for the transmitting end device. In this case, the feedback information for the transmitting end device transmitted through the PSFCHs is not limited to one bit, but may occupy one or more specific OFDM symbols. In this way, multiple bits may be used to feed back transmission results of multiple PSSCHs of the transmitting end device. In addition, the one or more specific OFDM symbols may further include assistance information for the PSFCHs for the transmitting end device. For example, the assistance information includes information indicating resources that can be used by the transmitting end device or information indicating resources that cannot be used by the transmitting end device. The frequency domain resources corresponding to the one or more specific OFDM symbols are preconfigured, and the number and start and end positions of physical resource blocks (PRBs) occupied by the frequency domain resources are fixed. For example, the frequency domain resources are the same as frequency domain resources of PSSCHs for the transmitting end device, and are determined by the transmitting end device.

In addition, in the omnidirectional communication slot, control information such as a first stage SCI may be received through time division multiplexing (TDM). The first stage SCI is, for example, for indicating occupancy of transmission resources, which helps the transmitting end device in resource selection. The communication unit 202 is configured to receive first stage SCI on one or more OFDM symbols in an omnidirectional communication slot, and determine resources that can be used for data transmission based on the first stage SCI, where the one or more OFDM symbols may correspond to one or more PSCCHs. The first stage SCI includes, for example, information of time-frequency resources to be utilized and preserved by the receiving end device. The transmitting end device that receives the first stage SCI excludes time-frequency resources that are to be utilized and preserved by the receiving end device which are indicated by the first stage SCI, when selecting time-frequency resources for data transmission with other user equipment. In this way, resource collision is effectively avoided.

One or more PSCCHs may be designed for carrying the first stage SCI. In the case where one PSCCH is designed for carrying the first stage SCI, that is, the PSCCH occupies one or more OFDM symbols as mentioned above, the PSCCH is used for all transmitting end devices, and the first stage SCI carried by the PSCCH is for indicating time-frequency resources to be utilized and preserved by the receiving end device.

In addition, in a case where multiple PSCCHs are designed for carrying the first stage SCI, that is, the one or more OFDM symbols as mentioned above correspond to multiple PSCCHs, each PSCCH occupies a portion of the one or more OFDM symbols and corresponds to one transmitting end device. The first stage SCI carried by each PSCCH includes information about time-frequency resources to be utilized and preserved by the receiving end device for the transmitting end device. In addition, the first stage SCI carried by each PSCCH may further include beam information for the transmitting end device. In this case, one PSCCH of the multiple PSCCHs is specific to the transmitting end device, and the first stage SCI carried by the PSCCH includes information about time-frequency resources to be utilized and preserved by the receiving end device for the transmitting end device. In addition, the first stage SCI carried by the PSCCH may further include beam information for the transmitting end device. Based on the first stage SCI received through the one or more OFDM symbols, the transmitting end device is able to distinguish which time-frequency resources are allocated to which UE and which beam for utilization. Hence, a scope of resource exclusion is narrowed, so that selection of time-frequency resources is more accurate and a utilization efficiency of the time-frequency resources is improved.

A specific example of design of an omnidirectional communication slot is described in detail with reference to FIG. 5 to FIG. 9 in the first embodiment, and is not repeated here.

In summary, the electronic apparatus 200 according to the embodiment periodically switches beam-based SL communication to the omnidirectional communication to receive feedback information and/or control information, which enables a timely and reliable delivery of the information.

### <Third Embodiment>

In the description of the electronic apparatuses for a receiving end device and a transmitting end device for SL communication in the above embodiments, some processes or methods are further disclosed. Hereinafter, an overview of the methods is given without repeating some of details discussed above. It should be noted that although disclosed in the description of the electronic apparatuses for a receiving end device and a transmitting end device for SL communication, the methods do not necessarily adopt the components as described or be performed by those components. For example, the embodiments of the electronic apparatuses for a receiving end device and a transmitting end device for SL communication may be implemented partially or entirely using hardware and/or firmware, while the methods for a receiving end device and a transmitting end device for SL communication discussed below may be implemented entirely by a computer-executable program, although the methods may employ the hardware and/or firmware for the electronic apparatuses for a receiving end device and a transmitting end device for SL communication.

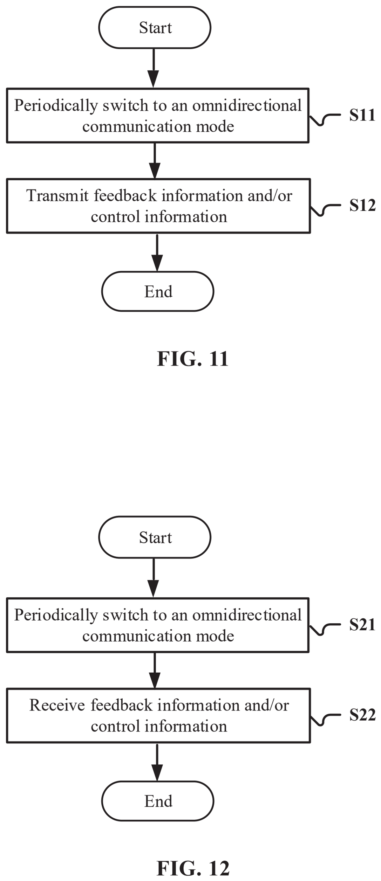

FIG. 11 shows a flow chart of a method for a receiving end device for SL communication according to another embodiment of the present disclosure. The method includes: periodically switching (S11) to an omnidirectional communication mode in beam-based communication with transmitting end devices for SL communication; and transmitting (S12) feedback information and/or control information to the transmitting end devices within a period of time during which the omnidirectional communication mode is adopted. The method may be performed on a receiving end device side, for example.

For example, the switching may be performed in one or more slots as a period. The period may be configured by a base station or recorded in a factory configuration. The period of time during which the omnidirectional communication mode is adopted may include one or more slots, which are referred to as omnidirectional communication slots.

Although not shown in the figure, the method may further include the following step: receiving a dynamic feedback indicator from the transmitting end device, so as to dynamically set the period of time during which the omnidirectional communication mode is adopted according to the dynamic feedback indicator. For example, switching to the omnidirectional communication mode is performed during a period of time indicated by the dynamic feedback indicator, or switching to the omnidirectional communication mode is skipped during the period of time indicated by the dynamic feedback indicator.

For example, feedback information and/or control information may be transmitted through omnidirectional broadcast in step S12.

In an example, the feedback information may be transmitted with one OFDM symbol in an omnidirectional communication slot. Here, the one OFDM symbol corresponds to PSFCHs for the transmitting end devices, one specific bit in the one OFDM symbol corresponds to a PSFCH for one transmitting end device, for indicating a transmission result of one PSSCH of the one transmitting end device. A frequency domain resource corresponding to the one OFDM symbol is preconfigured and divided into multiple PSFCH resources, and the PSFCH for the one transmitting end device corresponds to one PSFCH resource in the frequency domain.

In another example, the feedback information may be transmitted with multiple OFDM symbols in an omnidirectional communication slot. Here, each one or more OFDM symbols among the multiple OFDM symbols correspond to PSFCHs for one transmitting end device, for indicating transmission results of one or more PSSCHs of the one transmitting end device. Frequency domain resources corresponding to each one or more OFDM symbols among the multiple OFDM symbols are preconfigured, and the number and start and end positions of physical resource blocks occupied by the frequency domain resources are fixed. In addition, each one or more OFDM symbols among the multiple OFDM symbols may further include assistance information of the PSFCHs of the one transmitting end device. For example, the assistance information includes information indicating resources that can be used by the one transmitting end device or information indicating resources that cannot be used by the one transmitting end device.

In addition, the first stage SCI may be transmitted with one or more OFDM symbols in an omnidirectional communication slot, and the one or more OFDM symbols correspond to one or more PSCCHs. The first stage SCI includes information about time-frequency resources to be utilized and preserved by the receiving end device.

In a case where the one or more OFDM symbols correspond to multiple PSCCHs, each PSCCH corresponds to one transmitting end device, and first stage SCI carried by each PSCCH includes information about time-frequency resources to be utilized and preserved by the receiving end device for the transmitting end device, and beam information for the transmitting end device.

The above method corresponds to the electronic apparatus 100 in the first embodiment, detailed description of which is given in the first embodiment and is not repeated here.

FIG. 12 shows a flow chart of a method for a transmitting end device for SL communication according to another embodiment of the present disclosure. The method includes: periodically switching (S21) to an omnidirectional communication mode in beam-based communication with a receiving end device for SL communication; and receiving (S22) feedback information and/or control information from the receiving end device within a period of time during which the omnidirectional communication mode is adopted. The method may be performed on a transmitting end device side, for example.

For example, the switching may be performed in one or more slots as a period. The period may be configured by a base station or recorded in a factory configuration. The period of time during which the omnidirectional communication mode is adopted may include one or more omnidirectional communication slots.

Although not shown in the figure, the method may further include the following step: transmitting a dynamic feedback indicator to the receiving end device, so as to dynamically set the period of time during which the omnidirectional communication mode is adopted. For example, switching to the omnidirectional communication mode may be performed during a period of time indicated by the dynamic feedback indicator, or switching to the omnidirectional communication mode may be skipped during the period of time indicated by the dynamic feedback indicator.

For example, feedback information and/or control information may be received through omnidirectional broadcast in step S22.

In an example, the feedback information is received on one OFDM symbol in an omnidirectional communication slot, where one specific bit in the one OFDM symbol corresponds to a PSFCH for the transmitting end device, for indicating a transmission result of one PSSCH of the transmitting end device. A frequency domain resource corresponding to the one OFDM symbol is preconfigured and divided into multiple PSFCH resources, and the PSFCH for the transmitting end device corresponds to one specific PSFCH resource in the frequency domain.

In another example, the feedback information is received on one or more specific OFDM symbols in an omnidirectional communication slot, where the one or more specific OFDM symbols correspond to PSFCHs of the transmitting end device, for indicating transmission results of one or more PSSCHs of the transmitting end device. Frequency domain resources corresponding to the one or more specific OFDM symbols are preconfigured, and the number and start and end positions of physical resource blocks occupied by the frequency domain resources are fixed. In addition, the one or more specific OFDM symbols may further include assistance information of the PSFCHs for the transmitting end device. For example, the assistance information includes information indicating resources that can be used by the transmitting end device or information indicating resources that cannot be used by the transmitting end device.

In addition, first stage SCI may be received on one or more OFDM symbols in an omnidirectional communication slot, and the one or more OFDM symbols correspond to one or more PSCCHs. The method further includes: determining, based on the first stage SCI, resources available for data transmission. The first stage SCI includes information about time-frequency resources to be utilized and preserved by the receiving end device.

In a case where the one or more OFDM symbols correspond to multiple PSCCHs, one PSCCH of the multiple PSCCHs is specific to the transmitting end device, and the first stage SCI carried by the PSCCH includes information about time-frequency resources to be utilized and preserved by the receiving end device for the transmitting end device, and beam information for the transmitting end device.

The above method corresponds to the electronic apparatus 200 in the second embodiment, detailed description of which is given in the second embodiment and is not repeated here.

It is to be noted that the above methods can be used in combination or alone.

The technology of the present disclosure is applicable to various products.

For example, the electronic apparatus 100 and the electronic apparatus 200 may be implemented as various user equipment. The user equipment may be implemented as a mobile terminal (such as a smart phone, a tablet personal computer (PC), a notebook PC, a portable game terminal, a portable/dongle-type mobile router, and a digital camera) or a vehicle-mounted terminal (such as an automobile navigation device). The user equipment may be implemented as a terminal that performs machine-to-machine (M2M) communications (which is also referred to as a machine type communication (MTC) terminal). Furthermore, the user equipment may be a wireless communication module (such as an integrated circuit module including a single wafer) installed on each of the above-mentioned terminals.

### [Application Example of User Equipment]

### (First Application Example)

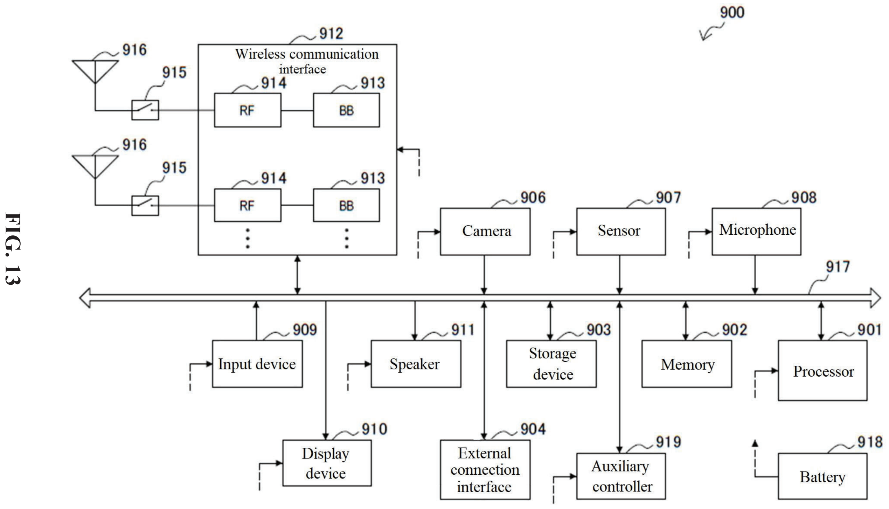

FIG. 13 is a block diagram showing an example of a schematic configuration of a smart phone 900 to which the technology of the present disclosure is applicable. The smart phone 900 includes a processor 901, a memory 902, a storage device 903, an external connection interface 904, a camera 906, a sensor 907, a microphone 908, an input device 909, a display device 910, a speaker 911, a wireless communication interface 912, one or more antenna switches 915, one or more antennas 916, a bus 917, a battery 918, and an auxiliary controller 919.

The processor 901 may be, for example, a CPU or a system on chip (SoC), and controls functions of the application layer and other layers of the smart phone 900. The memory 902 includes an RAM and an ROM, and stores data and programs executed by the processor 901. The storage device 903 may include a storage medium, such as a semiconductor memory and a hard disk. The external connection interface 904 is an interface for connecting an external device (such as a memory card and a universal serial bus (USB) device) to the smart phone 900.

The camera 906 includes an image sensor (such as a charge coupled device (CCD) and a complementary metal oxide semiconductor (CMOS)), and generates a captured image. The sensor 907 may include a group of sensors, such as a measurement sensor, a gyroscope sensor, a geomagnetic sensor, and an acceleration sensor. The microphone 908 converts sound inputted to the smart phone 900 into an audio signal. The input device 909 includes, for example, a touch sensor configured to detect a touch on a screen of the display device 910, a keypad, a keyboard, a button, or a switch, and receives an operation or information inputted from a user. The display device 910 includes a screen, such as a liquid crystal display (LCD) or an organic light emitting diode (OLED) display, and displays an output image of the smart phone 900. The speaker 911 converts the audio signal outputted from the smart phone 900 into sound.

The wireless communication interface 912 supports any cellular communication scheme (such as LTE and LTE-Advanced), and performs wireless communications. The wireless communication interface 912 may generally include, for example, a BB processor 913 and an RF circuit 914. The BB processor 913 may perform, for example, encoding/decoding, modulation/demodulation, and multiplexing/demultiplexing, and perform various types of signal processing for wireless communications. In addition, the RF circuit 914 may include, for example, a mixer, a filter and an amplifier, and transmit and receive a wireless signal via the antenna 916. It should be noted that, although the figure shows a situation where one RF link is connected to one antenna, this is only illustrative, and a situation where one RF link is connected to multiple antennas through multiple phase shifters is also possible. The wireless communication interface 912 may be a chip module on which the BB processor 913 and the RF circuit 914 are integrated. As shown in FIG. 13, the wireless communication interface 912 may include multiple BB processors 913 and multiple RF circuits 914. Although FIG. 13 shows an example in which the wireless communication interface 912 includes multiple BB processors 913 and multiple RF circuits 914, the wireless communication interface 912 may include a single BB processor 913 or a single RF circuit 914.

In addition to the cellular communication scheme, the wireless communication interface 912 may support another type of wireless communication scheme, such as a short-range wireless communication scheme, a near field communication scheme, and a wireless local area network (LAN) scheme. In this case, the wireless communication interface 912 may include a BB processor 913 and an RF circuit 914 for each wireless communication scheme.

Each of the antenna switches 915 switches a connection destination of the antenna 916 among multiple circuits (for example, circuits for different wireless communication schemes) included in the wireless communication interface 912.

Each of the antennas 916 includes a single or multiple antenna elements (such as multiple antenna elements included in a MIMO antenna), and is configured for the wireless communication interface 912 to transmit and receive wireless signals. As shown in FIG. 13, the smart phone 900 may include multiple antennas 916. Although FIG. 13 shows an example in which the smart phone 900 includes multiple antennas 916, the smart phone 900 may include a single antenna 916.

In addition, the smart phone 900 may include antenna(s) 916 for each wireless communication scheme. In this case, the antenna switches 915 may be omitted from the configuration of the smart phone 900.

The processor 901, the memory 902, the storage device 903, the external connection interface 904, the camera 906, the sensor 907, the microphone 908, the input device 909, the display device 910, the speaker 911, the wireless communication interface 912, and the auxiliary controller 919 are connected to each other via the bus 917. The battery 918 supplies power to each block of the smart phone 900 as shown in FIG. 13 via a feeder line. The feeder line is partially shown as a dashed line in the figure. The auxiliary controller 919 operates the least necessary function of the smart phone 900 in a sleep mode, for example.

In the smart phone 900 shown in FIG. 13, the communication unit 102 and a transceiver of the electronic apparatus 100, and the communication unit 202 and a transceiver of the electronic apparatus 200 may be implemented by the wireless communication interface 912. At least part of the functions may be implemented by the processor 901 or the auxiliary controller 919. For example, by executing the functions of the switching unit 101 and the communication unit 102, the processor 901 or the auxiliary controller 919 can periodically switch the beam-based SL communication to omnidirectional communication and transmit feedback information and/or control information during a period of time of the omnidirectional communication, thereby realizing timely and reliable transmission of the information. By executing the functions of the switching unit 201 and the communication unit 202, the processor 901 or the auxiliary controller 919 can periodically switch the beam-based SL communication to omnidirectional communication and receive feedback information and/or control information during a period of time of the omnidirectional communication, thereby realizing timely and reliable transmission of the information.

### (Second Application Example)

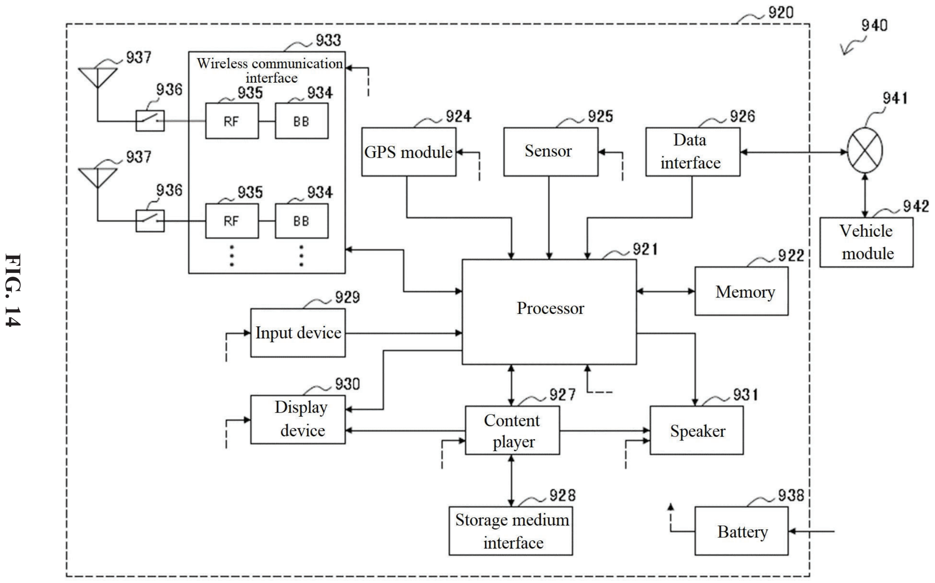

FIG. 14 is a block diagram showing an example of a schematic configuration of an automobile navigation device 920 to which the technology of the present disclosure is applicable. The automobile navigation device 920 includes a processor 921, a memory 922, a global positioning system (GPS) module 924, a sensor 925, a data interface 926, a content player 927, a storage medium interface 928, an input device 929, a display device 930, a speaker 931, a wireless communication interface 933, one or more antenna switches 936, one or more antennas 937, and a battery 938.

The processor 921 may be, for example, a CPU or SoC, and controls the navigation function and other functions of the automobile navigation device 920. The memory 922 includes an RAM and an ROM, and stores data and programs executed by the processor 921.

The GPS module 924 measures a position (such as latitude, longitude, and elevation) of the automobile navigation device 920 based on a GPS signal received from a GPS satellite. The sensor 925 may include a group of sensors, such as a gyroscope sensor, a geomagnetic sensor, and an air pressure sensor. The data interface 926 is connected to, for example, an in-vehicle network 941 via a terminal not shown, and acquires data (such as vehicle speed data) generated by a vehicle.

The content player 927 reproduces content stored in a storage medium (such as a CD and a DVD) inserted into the storage medium interface 928. The input device 929 includes, for example, a touch sensor configured to detect a touch on a screen of the display device 930, a button, or a switch, and receives an operation or information inputted from a user. The display device 930 includes a screen such as an LCD or OLED display, and displays an image or reproduced content of a navigation function. The speaker 931 outputs a sound or reproduced content of the navigation function.

The wireless communication interface 933 supports any cellular communication scheme (such as LTE and LTE-Advanced), and performs wireless communications. The wireless communication interface 933 may generally include, for example, a BB processor 934 and an RF circuit 935. The BB processor 934 may perform, for example, encoding/decoding, modulation/demodulation, and multiplexing/demultiplexing, and perform various types of signal processing for wireless communications. In addition, the RF circuit 935 may include, for example, a mixer, a filter and an amplifier, and transmit and receive a wireless signal via the antenna 937. The wireless communication interface 933 may be a chip module on which the BB processor 934 and the RF circuit 935 are integrated. As shown in FIG. 14, the wireless communication interface 933 may include multiple BB processors 934 and multiple RF circuits 935. Although FIG. 14 shows an example in which the wireless communication interface 933 includes multiple BB processors 934 and multiple RF circuits 935, the wireless communication interface 933 may include a single BB processor 934 or a single RF circuit 935.

In addition to the cellular communication scheme, the wireless communication interface 933 may support another type of wireless communication scheme, such as a short-range wireless communication scheme, a near field communication scheme, or a wireless LAN scheme. In this case, the wireless communication interface 933 may include a BB processor 934 and an RF circuit 935 for each wireless communication scheme.

Each of the antenna switches 936 switches a connection destination of the antenna 937 among multiple circuits (such as circuits for different wireless communication schemes) included in the wireless communication interface 933.

Each of the antennas 937 includes a single or multiple antenna elements (such as multiple antenna elements included in a MIMO antenna), and is configured for the wireless communication interface 933 to transmit and receive wireless signals. As shown in FIG. 14, the automobile navigation device 920 may include multiple antennas 937. Although FIG. 14 shows an example in which the automobile navigation device 920 includes multiple antennas 937, the automobile navigation device 920 may include a single antenna 937.

In addition, the automobile navigation device 920 may include antenna(s) 937 for each wireless communication scheme. In this case, the antenna switches 936 may be omitted from the configuration of the automobile navigation device 920.

The battery 938 supplies power to blocks of the automobile navigation device 920 shown in FIG. 14 via a feeder line. The feeder line is partially shown as a dashed line in the figure. The battery 938 accumulates electric power supplied from the vehicle.

In the automobile navigation device 920 shown in FIG. 14, the communication unit 102 and a transceiver of the electronic apparatus 100, and the communication unit 202 and a transceiver of the electronic apparatus 200 may be implemented by the wireless communication interface 933. At least part of the functions may be implemented by the processor 921. For example, by executing the functions of the switching unit 101 and the communication unit 102, the processor 921 can periodically switch the beam-based SL communication to omnidirectional communication and transmit feedback information and/or control information during a period of time of the omnidirectional communication, thereby realizing timely and reliable transmission of the information. By executing the functions of the switching unit 201 and the communication unit 202, the processor 921 can periodically switch the beam-based SL communication to omnidirectional communication and receive feedback information and/or control information during a period of time of the omnidirectional communication, thereby realizing timely and reliable transmission of the information.

The technology of the present disclosure may be implemented as an in-vehicle system (or vehicle) 940 including the one or more blocks of the automobile navigation device 920, an in-vehicle network 941, and a vehicle module 942. The vehicle module 942 generate vehicle data (such as vehicle speed, engine speed, and failure information), and outputs the generated data to the in-vehicle network 941.

Basic principles of the present disclosure are described above in conjunction with specific embodiments. However, it should be noted that those skilled in the art can understand that all or any steps or components of the methods and apparatuses of the present disclosure can be implemented in any computing device (including processors, storage media, and the like) or a network of computing devices in a form of hardware, firmware, software or a combination thereof. Such implementation can be realized by those skilled in the art after reading the description of the present disclosure, by utilizing basic knowledge of circuit design or basic programming skills.

Moreover, a program product storing machine-readable instruction codes is further provided according to an embodiment of the present disclosure. The instruction codes, when read and executed by a machine, may implement the methods according to the embodiments of the present disclosure.

Accordingly, a storage medium for carrying the program product storing the machine-readable instruction codes is further included in the present disclosure. The storage medium includes, but is not limited to, a floppy disk, an optical disk, a magneto-optical disk, a storage card, a memory stick, and the like.

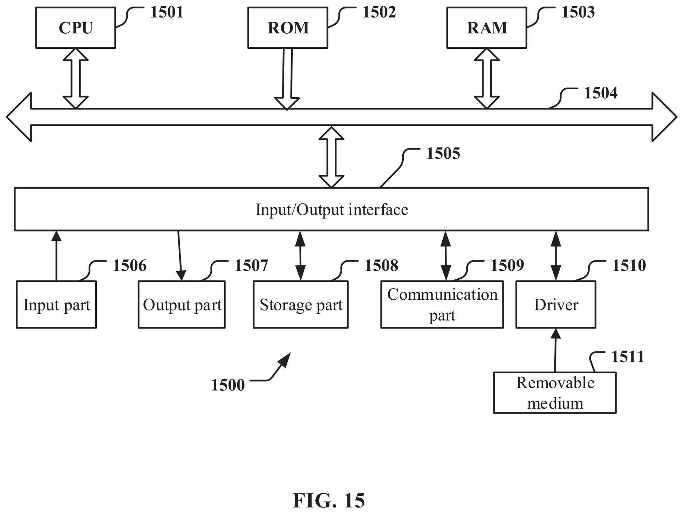

In a case of implementing the embodiments of the present disclosure in software or firmware, the program constituting the software is mounted to a computer with a dedicated hardware structure (such as a general-purpose personal computer 1500 as shown in FIG. 15) from the storage medium or network. The computer, when mounted with various programs, performs various functions.

In FIG. 15, a central processing unit (CPU) 1501 executes various processes according to a program stored in a read-only memory (ROM) 1502 or a program loaded from a storage part 1508 to a random-access memory (RAM) 1503. In the RAM 1503, data required for the CPU 1501 to perform various processes or the like is stored as necessary. The CPU 1501, the ROM 1502 and the RAM 1503 are connected to each other via a bus 1504. An input/output interface 1505 is connected to the bus 1504.

The following components are connected to the input/output interface 1505: an input part 1506 (including a keyboard, a mouse, and the like), an output part 1507 (including a display such as a cathode ray tube (CRT) and a liquid crystal display (LCD), and a loudspeaker, and the like), a storage part 1508 (including a hard disk and the like), and a communication part 1509 (including a network interface card, such as a LAN card, and a modem). The communication part 1509 performs communication processing via a network, such as the Internet. A driver 1510 may be connected to the input/output interface 1505 as needed. A removable medium 1511, such as a magnetic disk, an optical disk, a magnetic optical disk, and a semiconductor memory, is mounted to the driver 1510 as required, so that a computer program read therefrom is mounted to the storage part 1508 as required.

In a case that the above processes are implemented by software, the program constituting the software is mounted from a network, such as the Internet, or from a storage medium, such as the removable medium 1511.

Those skilled in the art should understood that, the storage medium is not limited to the removable medium 1511, as shown in FIG. 15, which stores a program and is distributed separately from the device so as to provide the program for a user. Examples of the removable medium 1511 includes a magnetic disk (including a floppy disk (registered trademark)), an optical disk (including a compact disk read-only memory (CD-ROM) and a Digital Versatile Disk (DVD)), a magneto-optical disk (including a mini disk (MD) (registered trademark)), and a semiconductor memory. Alternatively, the storage medium may be the ROM 1502, the hard disk contained in the storage part 1508, or the like. The storage medium stores a program and is distributed to the user along with an apparatus in which the storage medium is incorporated.

It should be further noted that components or steps in the apparatuses, methods and systems of the present disclosure can be decomposed and/or recombined. Such decomposition and/or recombination should be considered equivalents of the present disclosure. Furthermore, steps for executing the above processes may naturally be executed in a chronological order as described, but do not necessarily need to be executed in the chronological order. Certain steps may be performed in parallel with or independently of each other.

Finally, it should be noted that terms "include", "comprise" or any other variants are intended to be non-exclusive. Therefore, a process, method, article or device including a series of elements includes not only the elements but also other elements that are not enumerated, or further includes elements inherent to the process, method, article or device. In addition, without more limitation, the element defined by the statement "comprising (including) a(n)..." does not exclude existence of other identical elements in the process, method, article or device including the element.

Although the embodiments of the present disclosure are described in detail above with reference to the accompanying drawings, it should be understood that the embodiments are only for illustrating the present disclosure and do not constitute a limitation of the present disclosure. For those skilled in the art, various modifications and changes can be made to the embodiments without departing from the essence and scope of the present disclosure. Therefore, the scope of the present disclosure is limited by only the appended claims and equivalents thereof.

## Claims

1. An electronic apparatus for a receiving end device for sidelink communication, comprising:
a processing circuitry configured to:
periodically switch to an omnidirectional communication mode in beam-based communication with transmitting end devices for the sidelink communication; and
transmit feedback information and/or control information to the transmitting end devices within a period of time during which the omnidirectional communication mode is adopted.

2. The electronic apparatus according to claim 1, wherein the processing circuitry is configured to perform the switching in one or more slots as a period.

3. The electronic apparatus according to claim 2, wherein the period is configured by a base station or recorded in a factory configuration.

4. The electronic apparatus according to claim 2, wherein the period of time during which the omnidirectional communication mode is adopted comprises one or more omnidirectional communication slots.

5. The electronic apparatus according to claim 4, wherein the processing circuitry is configured to transmit the feedback information with one orthogonal frequency divisional multiplexing (OFDM) symbol in the omnidirectional communication slots, wherein the one OFDM symbol corresponds to physical sidelink feedback channels (PSFCHs) for the transmitting end devices, one specific bit in the one OFDM symbol corresponds to a PSFCH for one transmitting end device, for indicating a transmission result of one physical sidelink shared channel (PSSCH) of the one transmitting end device.

6. The electronic apparatus according to claim 5, wherein a frequency domain resource corresponding to the one OFDM symbol is preconfigured and divided into a plurality of PSFCH resources, and the PSFCH for the one transmitting end device corresponds to one PSFCH resource in a frequency domain.

7. The electronic apparatus according to claim 4, wherein the processing circuitry is configured to transmit the feedback information with a plurality of OFDM symbols in the omnidirectional communication slots, wherein each one or more OFDM symbols among the plurality of OFDM symbols correspond to PSFCHs for one transmitting end device, for indicating transmission results of one or more PSSCHs of the one transmitting end device.

8. The electronic apparatus according to claim 7, wherein frequency domain resources corresponding to each one or more OFDM symbols among the plurality of OFDM symbols are preconfigured, and a number and start and end positions of physical resource blocks occupied by the frequency domain resources are fixed.

9. The electronic apparatus according to claim 7, wherein each one or more OFDM symbols among the plurality of OFDM symbols further comprise assistance information for the PSFCHs for the one transmitting end device.

10. The electronic apparatus according to claim 9, wherein the assistance information comprises information indicating resources that can be used by the one transmitting end device or information indicating resources that cannot be used by the one transmitting end device.

11. The electronic apparatus according to claim 4, wherein the processing circuitry is configured to transmit first stage sidelink control information with one or more OFDM symbols in the omnidirectional communication slots, and the one or more OFDM symbols correspond to one or more physical sidelink control channels (PSCCHs).

12. The electronic apparatus according to claim 11, wherein the first stage sidelink control information comprises information about time-frequency resources to be utilized and preserved by the receiving end device.

13. The electronic apparatus according to claim 11, wherein in a case where the one or more OFDM symbols correspond to a plurality of PSCCHs, each of the plurality of PSCCHs corresponds to one transmitting end device, and the first stage sidelink control information carried by each PSCCH comprises information about time-frequency resources to be utilized and preserved by the receiving end device for the transmitting end device, and beam information for the transmitting end device.

14. The electronic apparatus according to claim 1, wherein the processing circuitry is further configured to receive a dynamic feedback indicator from the transmitting end devices, so as to dynamically set the period of time during which the omnidirectional communication mode is adopted according to the dynamic feedback indicator.

15. The electronic apparatus according to claim 14, wherein the processing circuitry is configured to switch to the omnidirectional communication mode during a period of time indicated by the dynamic feedback indicator, or skip switching to the omnidirectional communication mode during the period of time indicated by the dynamic feedback indicator.

16. The electronic apparatus according to claim 1, wherein the processing circuitry is configured to transmit the feedback information and/or control information through omnidirectional broadcast.

17. An electronic apparatus for a transmitting end device for sidelink communication, comprising:
a processing circuitry configured to:
periodically switch to an omnidirectional communication mode in beam-based communication with a receiving end device for the sidelink communication; and
receive feedback information and/or control information from the receiving end device within a period of time during which the omnidirectional communication mode is adopted.

18. The electronic apparatus according to claim 17, wherein the processing circuitry is configured to perform the switching in one or more slots as a period.

19. The electronic apparatus according to claim 18, wherein the period is configured by a base station or recorded in a factory configuration.

20. The electronic apparatus according to claim 18, wherein the period of time during which the omnidirectional communication mode is adopted comprises one or more omnidirectional communication slots.

21. The electronic apparatus according to claim 20, wherein the processing circuitry is configured to receive the feedback information on one OFDM symbol in the omnidirectional communication slots, wherein one specific bit in the one OFDM symbol corresponds to a PSFCH for the transmitting end device, for indicating a transmission result of one PSSCH of the transmitting end device.

22. The electronic apparatus according to claim 21, wherein a frequency domain resource corresponding to the one OFDM symbol is preconfigured and divided into a plurality of PSFCH resources, and the PSFCH for the transmitting end device corresponds to one specific PSFCH resource in a frequency domain.

23. The electronic apparatus according to claim 20, wherein the processing circuitry is configured to receive the feedback information on one or more specific OFDM symbols in the omnidirectional communication slots, wherein the one or more specific OFDM symbols correspond to PSFCHs for the transmitting end device, for indicating transmission results of one or more PSSCHs of the transmitting end device.

24. The electronic apparatus according to claim 22, wherein frequency domain resources corresponding to the one or more specific OFDM symbols are preconfigured, and a number and start and end positions of physical resource blocks occupied by the frequency domain resources are fixed.

25. The electronic apparatus according to claim 23, wherein the one or more specific OFDM symbols further comprise assistance information for the PSFCH for the transmitting end device.

26. The electronic apparatus according to claim 25, wherein the assistance information comprises information indicating resources that can be used by the transmitting end device or information indicating resources that cannot be used by the transmitting end device.

27. The electronic apparatus according to claim 20, wherein the processing circuitry is further configured to receive first stage sidelink control information on one or more OFDM symbols in the omnidirectional communication slots, and the one or more OFDM symbols correspond to one or more PSCCHs, and
the processing circuitry is configured to determine, based on the first stage sidelink control information, resources available for data transmission.

28. The electronic apparatus according to claim 27, wherein the first stage sidelink control information comprises information about time-frequency resources to be utilized and preserved by the receiving end device.

29. The electronic apparatus according to claim 27, wherein in a case where the one or more OFDM symbols correspond to a plurality of PSCCHs, one PSCCH of the plurality of PSCCHs is specific to the transmitting end device, and the first stage sidelink control information carried by the PSCCH comprises information about time-frequency resources to be utilized and preserved by the receiving end device for the transmitting end device, and beam information for the transmitting end device.

30. The electronic apparatus according to claim 17, wherein the processing circuitry is further configured to transmit a dynamic feedback indicator to the receiving end device, so as to dynamically set the period of time during which the omnidirectional communication mode is adopted.

31. The electronic apparatus according to claim 30, wherein the processing circuitry is configured to switch to the omnidirectional communication mode during a period of time indicated by the dynamic feedback indicator, or skip switching to the omnidirectional communication mode during the period of time indicated by the dynamic feedback indicator.

32. The electronic apparatus according to claim 17, wherein the processing circuitry is configured to receive the feedback information and/or control information through omnidirectional broadcast.

33. A method for a receiving end device for sidelink communication, comprising:
periodically switching to an omnidirectional communication mode in beam-based communication with transmitting end devices for the sidelink communication; and
transmitting feedback information and/or control information to the transmitting end devices within a period of time during which the omnidirectional communication mode is adopted.

34. A method for a transmitting end device for sidelink communication, comprising:
periodically switching to an omnidirectional communication mode in beam-based communications with a receiving end device for the sidelink communication; and
receiving feedback information and/or control information from the receiving end device within a period of time during which the omnidirectional communication mode is adopted.

35. A computer-readable storage medium having computer-executable instructions stored thereon, which when executed by a processor, cause the processor to perform the method according to claim 33 or 34.
